# FASCICULE DE BREVET EUROPEEN

(11) **EP 2 772 143 B1**
(45) Date de publication et mention de la délivrance du brevet: **05.12.2018**
(21) Numéro de dépôt: 14155623.3
(22) Date de dépôt: 18.02.2014
(51) Int. Cl.: A23N 15/00, B26D 3/26

(54) **Procédé et installation pour étrogner des têtes de salades adultes**
Verfahren und Anlage zum Entfernen der Strünke von ausgewachsenen Salatköpfen
Method and installation for coring adult heads of lettuce

(30) Priorité: 27.02.2013 FR 1351749
(43) Date de publication de la demande: 03.09.2014
(73) Titulaire: FLORETTE Holding, 50430 Lessay (FR)
(72) Inventeur: Savary, Laurent, 50430 Angoville Sur Ay (FR)
(74) Mandataire: Cabinet HERRBURGER

(56) Documents cités:
- EP-A1- 1 327 393
- EP-A1- 1 759 600
- WO-A2-2008/033741
- US-A- 3 396 766
- US-A- 4 985 268
- US-A1- 2011 081 463
- US-A1- 2011 293 797

## Description

### Domaine de l'invention

La présente invention se rapporte à un procédé pour éliminer le trognon d'un légume tel qu'une tête de salade adulte et une installation pour la mise en oeuvre de ce procédé.

### Etat de la technique

Selon l'état de la technique on épluche les salades en les faisant tourner avec leur trognon et en coupant les feuilles extérieures au trognon avec des couteaux circulaires placés sur la trajectoire des feuilles de la tête de salade. Ces couteaux s'approchent le plus près du trognon de sorte que la lame coupe tout autour du trognon jusqu'au décrochement total des feuilles.

Il est reconnu que ce procédé convient pour des salades adultes dont le trognon a toujours la même forme et une longueur standard. A titre d'exemple, il s'agit des scaroles, des frisées, des batavias, laitues.

Mais ce procédé utilisé aussi pour d'autres types de salades tels que les salades iceberg ou radicchio, convient mal, car il occasionne des pertes importantes en bon produit. En effet, ces salades ont des trognons qui peuvent varier en diamètre, en longueur et en forme d'une salade à l'autre. Or, en installant une telle tête de salade sur un dispositif rotatif pour couper les feuilles, il est impossible de positionner la lame puisqu'on ne connaît pas la forme de trognon. Il en résulte des imprécisions générant des défauts d'épluchage qui, dans certains cas, éliminent de bonnes feuilles propres à la consommation et d'un autre côté, laissent des morceaux de trognon accrochés aux feuilles qui sont alors écartées vers les déchets. Cela se traduit par des pertes importantes de rendement.

Il peut également arriver que des morceaux de trognon qui n'ont peu être écartés, se retrouvent dans le produit conditionné entraînant des non-conformités et des réclamations.

*« Il est connu selon le document* WO 2008/033 741 *SUNKIST de découper des fruits de forme arrondie, c'est-à-dire assimilables à un corps de révolution, ayant ainsi un axe, en des tronçons pour découper le coeur des tronçons.*

*Le document décrit l'orientation automatique, du produit par roulage en vue de sa découpe par un ensemble de couteaux puis la mise en place des tranches du produit les unes à côté des autres suivant une répartition en matrice et la découpe du coeur des tranches, globalement dans les tranches de fruits ainsi découpés. Mais cette installation ne pourrait convenir pour étrogner des légumes à trognons car les légumes ne pourraient être orientés et positionnés avec les moyens décrits dans cette machine, c'est-à-dire par un mouvement de rotation entre deux rouleaux à génératrice incurvée positionnant automatiquement le produit dans la partie la plus large du volume défini par les deux rouleaux pour ensuite découper le produit en tranches dans cette position d'axe horizontal nécessaire pour le transfert du produit dans le dispositif d'orientation et ensuite le passage automatique du produit dans le dispositif de coupe en tranches.*

*Cette installation comporte un moyen de retournement basculant le produit coupé en tranches avec son axe sensiblement horizontal dans une position avec son axe vertical puis la répartition des tranches en vue de la découpe des coeurs des tranches.*

*Un tel procédé ou installation ne pourrait s'appliquer à l'étrognage des légumes à la fois pour les raisons indiquées ci-dessus et parce que le trognon d'un légume ne traverse pas l'intégralité de la tête du légume, mais s'arrête à une certaine profondeur, De plus, le légume ne peut être traité qu'en position verticale retournée, c'est-à-dire le trognon tourné vers le haut. »*

*Le document* EP 1 759 600 *décrit un procédé de parage mécanisé de salades consistant à enlever les parties non comestibles de la salade. Ce document rappelle que le parage manuel consiste à enlever le trognon puis les feuilles abimées, nécrosées, les côtes rosies et les feuilles cassées de la salade.*

*Or, enlever le trognon signifie dans cette opération manuelle de parage (c'est-à-dire d'amélioration d'aspect) enlever la partie extérieure du trognon qui dépasse du dessous de la tête de salade. La tête de salade doit rester entière pour sa présentation et sa vente. Il ne peut être question d'enlever le trognon dans la tête de salade puisque toutes les feuilles y sont attachées: les feuilles seraient en vrac et de plus, détachées du trognon de sorte qu'elles faneraient rapidement. Le parage mécanisé décrit ne consiste qu'à effectuer mécaniquement cette opération manuelle. Le parage mécanique ne concerne que l'aspect (forme extérieure) de la salade et non sa structure.*

### But de l'invention

La présente invention a pour but de développer un procédé et une installation d'étrognage permettant de découper une tête de salade ou un légume de ce type avec une grande précision pour augmenter le rendement de la découpe tout en conservant un excellent niveau de qualité et en évitant le rejet de feuilles ou parties de feuille bonnes à la consommation ou inversement la présence de morceaux de trognon dans les produits conditionnés.

### Exposé et avantages de l'invention

A cet effet, l'invention a pour objet un procédé pour éliminer le trognon d'un légume tel qu'une tête de salade adulte, procédé selon lequel
- on détermine à vue sensiblement l'axe du trognon sur une tête de légume orientée de façon que son dessous avec l'amorce du trognon soit tourné vers le haut,
- on découpe la tête de légume en position retournée, en tronçons par des plans de coupe au moins sensiblement perpendiculaires à l'axe ainsi repéré, et
- on transfère les tronçons un à un pour leur détection en position retournée,
- on détecte par analyse d'image des tronçons en position retournée, l'existence d'un morceau de tronçon dans chaque tronçon et la position de ce trognon dans un système de coordonnées associé à ce tronçon,
- on transfert chaque tronçon ainsi détecté, associé à son système de coordonnées dans l'axe d'un dispositif d'étrognage,
- on découpe le trognon du tronçon en position retournée, on récupère le tronçon étrogné, et
- on répète le cycle de détection de la présence d'un trognon et de détermination de la position du trognon pour les autres tronçons et en cas de trognon, on découpe celui-ci dans le tronçon.

Le procédé selon l'invention qui va dans une direction opposée à toutes celles des procédés utilisés actuellement pour découper des salades ou légumes de ce type sans recueillir le trognon, permet de connaître de manière très précise dans chaque tête de légume la position du trognon en fonction de sa profondeur de pénétration en quelque sorte dans le légume. En effet, en tronçonnant la tête de légume en tranches, on peut distinguer les tronçons qui ont un morceau de trognon et le tronçon supérieur qui, en général, n'a pas de trognon.

En outre, bien que le trognon soit toujours globalement de forme tronconique, c'est-à-dire une partie de grand diamètre à sa base et se terminant par une partie effilée, la découpe de la tête en plusieurs tronçons, permet d'avoir dans chaque tronçon un morceau de trognon qui peut être cerné au plus près par un moyen de découpe tel qu'un couteau fût-il circulaire, en forme de manchon

Comme au niveau d'un tronçon, l'orientation du morceau de trognon est en général perpendiculaire à la surface de coupe et que ce morceau est assimilable à un tronçon cylindrique, il est facile d'adapter la découpe du morceau de tronçon, c'est-à-dire la section du couteau à la section du trognon ainsi repérée dans le tronçon en modifiant et en adaptant la section de la découpe.

De façon générale, le procédé consiste à partir de la partie de la tête de légume où le tronçon existe nécessairement, c'est-à-dire le dessous de la tête de légume pour progresser vers le sommet.

De façon avantageuse, on effectue les opérations de repérage de l'axe du trognon, de coupe du légume en tronçons, de détection du trognon dans les tronçons et de découpe des morceaux du trognon sur une tête de légume orientée de façon que son dessous avec l'amorce du trognon soit tourné vers le haut.

Cette orientation choisie pour les différentes opérations précédant l'étrognage, permet d'avoir une orientation confortable de la tête de légume tant pour le repérage initial qui est de préférence effectué à vue par un opérateur, que pour la détection de la présence d'un morceau de trognon dans un tronçon et la détection de la position de ce morceau de tronçon et éventuellement de la section du morceau de tronçon puisque l'équipement d'analyse est un équipement optique ou optoélectronique, visant de préférence le produit par le dessus.

Enfin, pour la découpe du trognon qui suit le repérage, il est tout aussi avantageux que l'orientation des tronçons dessus/dessous, soit conservée.

Suivant une autre caractéristique avantageuse, on coupe la tête de légume en trois tronçons selon des plans sensiblement perpendiculaires à l'axe du trognon préalablement repéré sur le légume entier pour obtenir un tronçon inférieur, un tronçon intermédiaire et un tronçon supérieur, le tronçon inférieur ayant une face inférieure et une face supérieure, les tronçons intermédiaires ont une face inférieure et une face supérieure et le tronçon supérieur, une face inférieure, la détection du trognon dans chaque tronçon se faisant sur les tronçons orientés avec leur dessous ou leur face inférieure présenté(e) pour la détection et la localisation du trognon et sa découpe dans le tronçon.

En effet, pour une tête de légume habituelle de forme plus ou moins sphérique, il est avantageux de limiter la découpe en trois tronçons, ce qui permet de cerner au plus près et de la manière la plus efficace sur le plan du travail, le morceau de trognon dans chaque tronçon.

L'invention a également pour objet, une installation d'étrognage pour enlever le trognon de têtes de légumes destinées à être ensuite découpées telles que des têtes de salades, caractérisée en ce qu'elle comprend :
- un dispositif de repérage de l'axe de la tête de légume à étrogner,
- un dispositif de découpe en tronçons pour découper perpendiculairement à l'axe la tête de légume orientée, en tronçons,
- un support portant chaque tronçon,
- un dispositif de détection qui détecte la présence d'un trognon dans chaque tronçon, et définit la position du trognon ainsi détecté dans le tronçon, le dispositif de détection associant un repère de coordonnées dans lequel il définit la position du trognon par rapport au support dans le tronçon détecté,
- un dispositif de découpe qui reçoit le tronçon positionné sur le support avec son trognon de façon à découper le trognon et récupérer le tronçon étrogné, et
- une unité centrale de commande gérant le fonctionnement de l'installation.

Suivant une autre caractéristique, les tronçons sont positionnés sur un support auquel le dispositif de détection associe un repère de coordonnées dans lequel il définit la position du trognon par rapport au support dans le tronçon détecté, ce support passant dans le dispositif de découpe de trognon pour être positionné dans l'axe de l'outil de découpe.

Suivant une autre caractéristique, le dispositif de découpe de trognon comporte un plateau muni d'un orifice occupé par un contre-couteau en forme de manchon creux et au-dessus de ce plateau qui reçoit le tronçon à étrogner, un couteau de forme circulaire ou effectuant un mouvement circulaire et descendant dans le tronçon à étrogner pour en enlever le trognon.

Suivant une autre caractéristique, le couteau de découpe du morceau de trognon dans un tronçon est un couteau circulaire.

### Dessins

La présente invention sera décrite ci-après à l'aide d'un mode de réalisation d'un procédé et d'une installation d'élimination des trognons de têtes de salades ou de légumes de ce type, représentés dans les dessins annexés dans lesquels :
- la figure 1A est une vue de côté schématique d'une tête de salade montrant les différents plans de coupe,
- la figure 1B montre la tête de salade de la figure 1A coupée en tronçons,
- la figure 2 est un schéma par blocs du procédé d'étrognage,
- la figure 3 est le schéma d'une installation d'étrognage de têtes de légume,
- la figure 4 dans ses parties 4A, 4B, 4C, montre les étapes de détection de la position du trognon dans un tronçon de la tête de salade,
- la figure 5 montre dans ses parties 5A-5C très schématiquement une machine d'élimination du trognon et les différentes étapes de fonctionnement.

### Description de modes de réalisation de l'invention

L'invention a pour objet un procédé et une installation d'étrognage de têtes de salades ou de légumes de ce type, destinées à être préparées et conditionnées après avoir été découpées. Comme par définition, les têtes à préparer ont un trognon qu'il faut éliminer, on décrira tout d'abord la structure générale d'une tête et le repérage du trognon en vue de sa découpe avant la description du procédé et de l'installation d'étrognage.

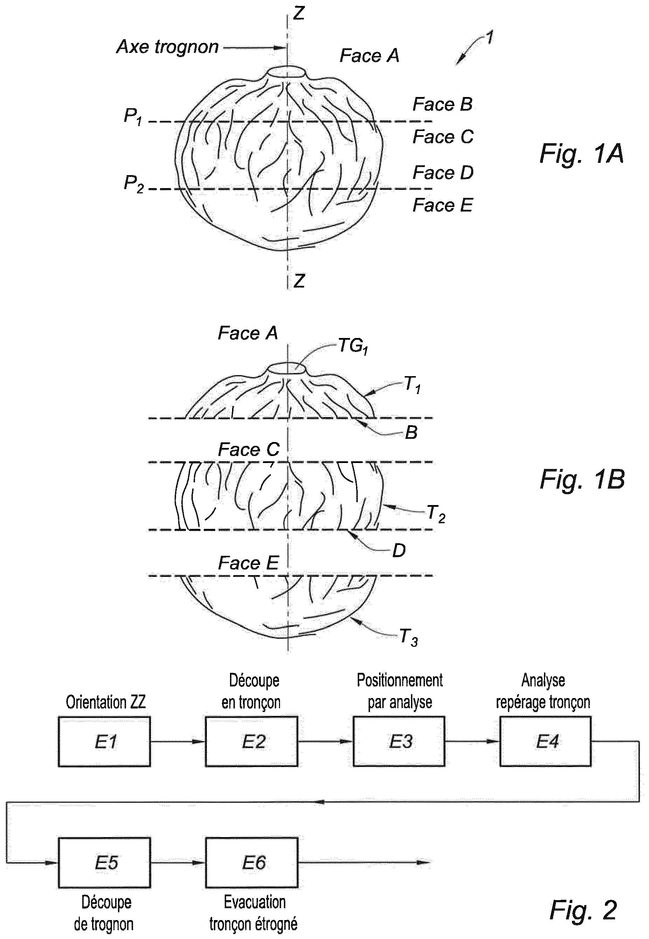

Les têtes de salades 1 et plus généralement les têtes de légumes en forme de boules avec un trognon ont une forme représentée avant et après découpe aux figures 1A, 1B.

La figure 1A est le dessin d'une tête de légume 1 (tête de salade) en position renversée dont on a figuré l'axe Z-Z du trognon TG1. La figure montre également les plans de coupe P1, P2 qui sont au moins sensiblement perpendiculaires à cet axe Z-Z. On découpe la tête de légume 1 qui a une forme de boule de préférence, en trois tronçons T1, T2, T3, à savoir et selon l'orientation naturelle, un tronçon inférieur T1, un tronçon intermédiaire T2 et un tronçon supérieur T3. Habituellement dans une tête de salade adulte 1, le tronçon inférieur T1 et le tronçon intermédiaire T2 ont un morceau de trognon TG1, TG2 alors qu'en général, le tronçon supérieur T3 n'a pas de trognon.

En effet, pour faciliter les opérations de détection et d'étrognage, il est apparu qu'il était plus simple d'examiner la tête de légume en position renversée par rapport à son orientation naturelle pour voir l'amorce du trognon coupé ; il en est de même pour la recherche de la présence du trognon dans tel ou tel tronçon coupé, du fait de l'orientation des équipements réalisant la détection du trognon et l'étrognage.

La figure 1B montre les trois tronçons T1-T3 découpés et les côtés ou faces qui seront détectées pour localiser la position du trognon.

Le tronçon inférieur T1 est en position retournée et sa face inférieure (face A) laisse apparaître le trognon TG1. Le tronçon intermédiaire T2 est aussi détecté en position retournée, c'est-à-dire que sa face inférieure C est tournée vers le haut. Il en est de même du tronçon supérieur T3 dont la face inférieure E est tournée vers le haut.

Selon le procédé d'étrognage de l'invention, (figure 2), dans une première étape E1, on détermine à vue l'orientation du trognon TG1 dans la tête de légume en présentant la tête de légume en position retournée, c'est-à-dire que l'amorce du trognon sortant de la tête de légume est tournée vers le haut.

Après ce repérage de l'axe Z-Z de la tête de légume qui est aussi celui du trognon, on découpe cette tête (E2) en plusieurs tronçons suivant des plans de coupe sensiblement perpendiculaires à cet axe. Par cette découpe de la tête retournée, on obtient un premier tronçon T1 (tronçon du dessous) d'où dépassent en général le trognon TG1, un ou plusieurs tronçons intermédiaires T2 et le dernier tronçon T3 qui est le tronçon du dessus de la tête.

Ensuite, on place les différents tronçons T1-T3 en position renversée (E3) pour détecter par analyse d'image (E4), l'existence du trognon ou plus précisément d'un morceau du trognon dans chaque tronçon et la position de ce trognon dans un système de coordonnées.

Le tronçon T1-T3 ainsi détecté est transféré, associé à son système de coordonnées pour être étrogné, c'est-à-dire de façon que le trognon ainsi détecté, soit placé dans l'axe du dispositif d'étrognage, on découpe le trognon (E5), on récupère le tronçon (E6) étrogné et on évacue le morceau de trognon ainsi découpé.

Cette succession d'opérations se fait de manière automatique en partant de la première opération (E1) qui consiste à repérer à vue l'axe du trognon, la tête de légume étant en position renversée.

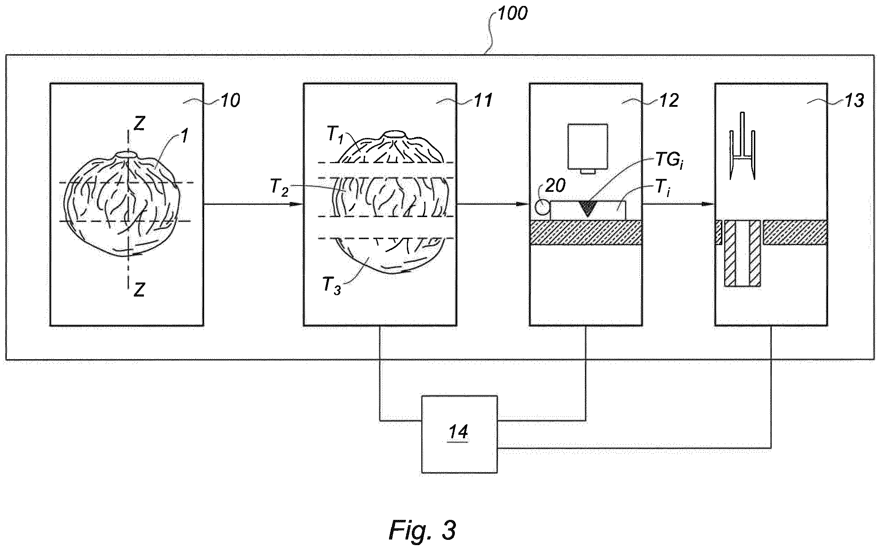

L'installation d'étrognage mettant en oeuvre le procédé ci-dessus est représentée schématiquement à la figure 3. Cette installation 100 se compose d'un dispositif de repérage 10 de l'axe (Z-Z) de la tête de légume 1 à étrogner suivi d'un dispositif de découpe 11 de la tête de légume en tronçons Ti alimentant un dispositif de détection 12 qui détecte la présence du trognon TGi dans chaque tronçon Ti transféré et associe la position (xi, yi) du trognon TGi au tronçon, par exemple par l'intermédiaire d'un support 20 portant le tronçon. Le tronçon Ti ainsi détecté est conduit dans le dispositif d'étrognage 13 qui enlève le trognon TGi et récupère en sortie le tronçon étrogné (TEi).

Le dispositif 10 utilise de préférence la détection visuelle de la tête de légume 1 et qui est aussi l'axe probable Z-Z du trognon et le positionnement de la tête dans un support de façon à conserver l'orientation de la tête ainsi repérée. Le support constitue le repère d'orientation.

La tête 1 avec son support est transférée dans le dispositif de découpe 11 qui découpe la tête en plusieurs tronçons T1-T3. Les dispositifs 10 et 11 peuvent également être combinés en ce que l'opérateur examine la tête de légume 1 et en fonction de l'axe (Z-Z) qu'il aura ainsi détecté, il place la tête de légume dans une position précise dans un support du dispositif de découpe 11, de sorte que la tête de légume est directement orientée par rapport aux organes de découpe du dispositif 11. Ces organes peuvent ainsi découper en tronçons suivant des plans P1, P2 au moins sensiblement perpendiculaires à l'axe Z-Z ainsi défini par la mise en place de la tête de légume 1 dans le dispositif de découpe en tronçons 11.

Ensuite, les tronçons T1-T3 sont transférés un à un dans le dispositif de détection 12. Le repérage du trognon TGi dans le tronçon Ti arrivant dans le dispositif de détection 12, se fait par rapport à un système de coordonnées qui peut être affecté à un support 20 transféré dans le dispositif de découpe 13 en conservant l'orientation du tronçon par rapport au support.

Le support 20 avec le tronçon Ti est ensuite positionné dans le dispositif de découpe 13 de façon que l'axe Z-Z du tronçon coïncide avec l'axe Zc-Zc de l'outil de découpe.

Le fonctionnement de l'installation d'étrognage 100 est géré par l'unité centrale de commande 14 qui gère la découpe dans le dispositif 11, la détection dans le dispositif 12 et le transfert précis des tronçons Ti dans le dispositif de découpe 13, l'opération de découpe du trognon et l'évacuation du tronçon étrogné.

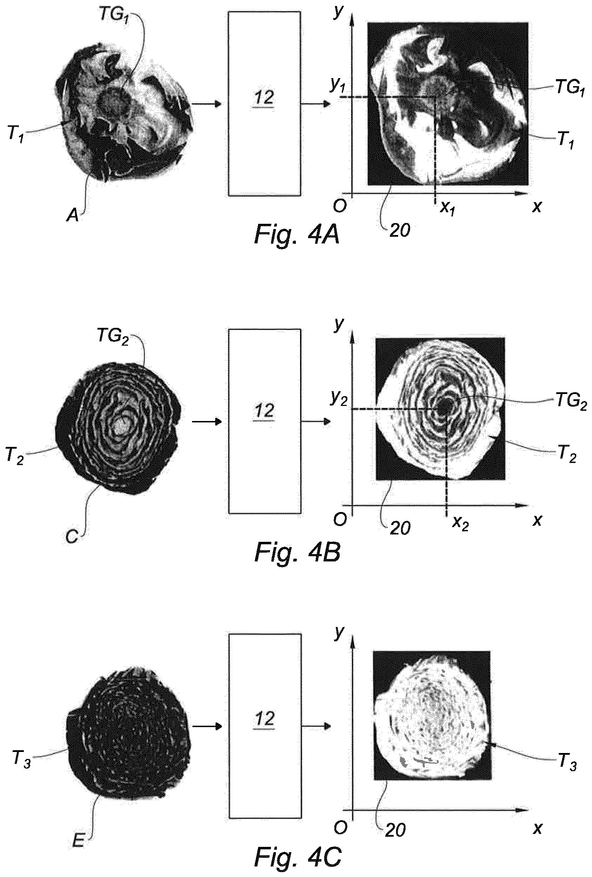

La détection de l'existence et de la position du trognon, se fait comme présenté schématiquement aux figures 4A-4C pour les trois tronçons T1-T3.

Dans un premier temps (figure 4A), le tronçon inférieur T1 est conduit en position renversée dans un dispositif de détection qui constate l'existence d'un trognon TG1 dans ce tronçon inférieur T1 et détermine la position (x1, y1) du trognon TG1 dans un système d'axes de coordonnées (ox, oy) du dispositif de détection 12. Le tronçon T1 ainsi détecté auquel est associée la position (x1, y1) du trognon TG1 dans le système de coordonnées, est transféré au dispositif de découpe 13.

De façon préférentielle, le tronçon T1 est installé en position fixe dans ou sur un support 20 qui passe dans le dispositif de détection 11. Ce support 20 est combiné à un système d'axe de coordonnées (ox, oy) dans lequel est repérée la position (x1, y1) du trognon TG1 pour passer ensuite dans le dispositif de coupe 13 en conservant son orientation et sa position par rapport au support 20.

Le support 20 peut être par exemple un bras de manipulateur auquel est associé un système de coordonnées permettant de définir la position (x1, y1) du trognon TG1 par rapport à ce bras de manipulateur de façon à conserver la position (x1, y1) lorsque le tronçon est transféré, par ce bras manipulateur, dans le dispositif de découpe 13.

La première opération décrite ci-dessus concerne la face A du tronçon T1.

La figure 4B montre la même opération de détection appliquée à la face inférieure C du tronçon intermédiaire T2. Pour ce tronçon intermédiaire T2, on a détecté l'existence du trognon TG2 dans la face inférieure C et on a déterminé sa position (x2, y2) par rapport au système de coordonnées (ox, oy) du dispositif de détection 12. Le tronçon intermédiaire T3 est alors transféré dans le dispositif de découpe 13 dans la position appropriée avec son trognon aligné sur l'axe de découpe. Le tronçon intermédiaire T2 est placé sur un support 20 auquel est associé un système de coordonnées (ox, oy) pour passer dans le dispositif de détection 12 et ensuite dans le dispositif de découpe 13.

Le support 20 peut être le même que celui utilisé pour le premier tronçon ou un support différent. Il peut également s'agir comme déjà indiqué, d'un bras de manipulateur auquel est associé un système de coordonnées permettant de repérer la position (x2, y2) du trognon TG2.

Le troisième tronçon T3 qui est le tronçon supérieur passe dans le dispositif de détection12 et il est positionné sur un support 20 avec un système d'axe de coordonnées (ox, oy). Ce support 20 peut être le même que l'un des supports précédents ou un support différent. Il peut s'agir comme précédemment d'un bras de manipulateur auquel est associé un axe de coordonnées (ox, oy).S'agissant du tronçon supérieur T3, en général celui-ci n'a pas de trognon aussi le tronçon T3 n'est pas envoyé dans le dispositif de découpe de trognon 13 ou passe dans celui-ci sans subir de découpe.

La description ci-dessus a été faite dans le cas de trois tronçons T1-T3 tenant compte de la structure de la tête de légume 1 et de la présence statistique d'un trognon nécessairement dans le tronçon inférieur T1 et dans le tronçon intermédiaire T2 mais en général absent du tronçon supérieur T3.

Si le légume a une forme plus allongée, on peut le couper en plusieurs tronçons intermédiaires suivant la probabilité de rencontrer le trognon dans ses tronçons intermédiaires sans avoir de tronçon de trop grande épaisseur qui gênerait l'étrognage dans le dispositif de découpe 13.

L'analyse du trognon dans le dispositif de détection 12 permet également de déterminer le cas échéant l'importance du trognon, c'est-à-dire très schématiquement son diamètre de façon à pouvoir adapter en cas de variations trop grandes entre les différents morceaux de trognon dans les tronçons, l'outil de découpe plus finement à la section du morceau de trognon rencontré dans chaque tronçon.

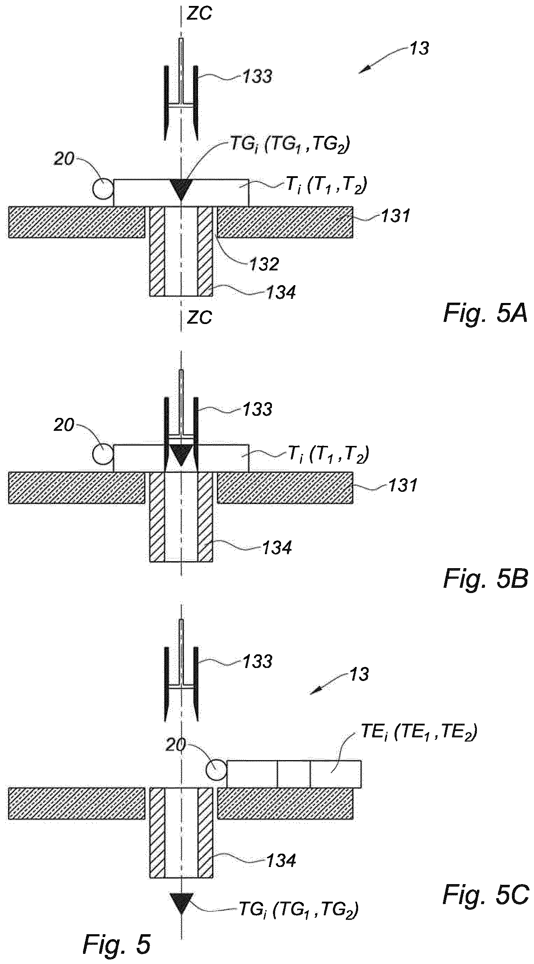

Les figures 5A-5C montrent très schématiquement le dispositif de découpe 13 et son fonctionnement.

Le dispositif de découpe 13 du trognon ou plus précisément du morceau de trognon se compose très schématiquement d'un plateau 131 sur lequel arrive le support 20 portant le tronçon T1, T2 qui, positionné par rapport à son support 20, est placé de façon que l'axe (Z-Z) du trognon TG1, TG2 se trouve dans l'axe (Zc, Zc) du dispositif de découpe 13.

Le plateau 131 est muni d'un orifice 132 dans lequel est logé un contre-couteau 134. Au-dessus du plateau 131 se trouve le couteau 133 en forme de manchon cylindrique dont l'arête inférieure est coupante. Ce couteau 133 est actionné dans l'axe (Zc, Zc).

Partant de la position relevée de la figure 5A, le couteau 133 est abaissé (figure 5B) pour découper le trognon TG1, TG2 par rapport au contre-couteau 134 et évacuer le trognon à travers le contre-couteau 134 (figure 5C). Puis lorsque le couteau 133 est relevé, le tronçon étrogné TE1, TE2 est évacué pour la suite de son traitement (sa découpe en petits morceaux et le conditionnement.

Le couteau 133 est de préférence un couteau circulaire en forme de manchon de section adaptée à la dimension moyenne des tronçons à découper. Mais ce couteau 133 peut également avoir une section variable commandée en fonction du trognon repéré dans le tronçon à traiter.

Les différentes opérations de détection (figures 4A-4C) de découpe (figures 5A-5C) sont de préférence commandées par l'unité centrale de commande 14 de l'installation.

Enfin, bien que la description ci-dessus décrive des couteaux pour la découpe des tronçons et celle des trognons, d'autres moyens de découpe sont envisageables.

### NOMENCLATURE DES ELEMENTS PRINCIPAUX

- 1: tête de légume/tête de salade
- 10: dispositif d'orientation de la tête 1
- 11: dispositif de coupe de la tête en tronçon
- 12: dispositif de repérage et de localisation du trognon dans un tronçon
- 13: dispositif de découpe du trognon
- 14: unité centrale de commande de l'installation
- 100: installation d'étrognage
- 131: plateau
- 132: orifice
- 133: couteau d'étrognage
- 134: contre-couteau
- T1, T2, T3: tronçons
- TG1, TG2: trognons/ morceaux de trognon
- E1-E6: étapes du procédé d'étrognage

## Revendications

1. Procédé pour éliminer le trognon d'une tête de légume à trognon tel qu'une tête de salade adulte, selon lequel
- on détermine à vue (E1) sensiblement l'axe (Z-Z) du trognon (TG) sur une tête de légume orientée de façon que son dessous avec l'amorce du trognon (TGi) soit tourné vers le haut,
- on découpe (E2) la tête de légume en position retournée en tronçons (T1-T3) par des plans de coupe (P1-P2) au moins sensiblement perpendiculaires à l'axe (Z-Z) ainsi repéré, et
- on transfère les tronçons (T1-T3) un à un pour leur détection en position retournée,
- on détecte par analyse d'image (E4) des tronçons (T1-T3) en position retournée (E3), l'existence d'un morceau de tronçon dans chaque tronçon et la position (x1, y1) de ce trognon dans un système de coordonnées associé à ce tronçon,
- on transfert chaque tronçon (T1-T3) ainsi détecté, associé à son système de coordonnées dans l'axe d'un dispositif d'étrognage,
- on découpe (E5) le trognon (TGi) du tronçon en position retournée, on récupère (E6) le tronçon étrogné (TEi), et
- on répète le cycle de détection de la présence d'un trognon (TGi) et de détermination de la position du trognon pour les autres tronçons (Ti) et en cas de trognon, on découpe celui-ci dans le tronçon.

2. Procédé selon la revendication 1,
**caractérisé en ce qu'**
on place le tronçon (Ti) sur un support (20) qui constitue le repère d'orientation auquel on affecte un système de coordonnées.

3. Procédé selon la revendication 1 et 2,
**caractérisé en ce qu'**
on positionne le support (20) avec le tronçon (Ti) de façon que l'axe Z-Z) du tronçon coïncide avec l'axe (Zc-Zc) de l'outil de découpe.

4. Procédé selon la revendication 1,
**caractérisé en ce qu'**
on coupe la tête de légume (1) en trois tronçons (T1-T3) selon des plans (P1, P2) sensiblement perpendiculaires à l'axe (Z-Z) du trognon préalablement repéré sur le légume entier pour obtenir un tronçon inférieur (T1), un tronçon intermédiaire (T2) et un tronçon supérieur (T3), le tronçon inférieur (T1) ayant une face inférieure (A) et une face supérieure, les tronçons intermédiaires (T2) ont une face inférieure (C) et une face supérieure (D) et le tronçon supérieur (T3), une face inférieure (E), la détection du trognon (TG1, TG2) dans chaque tronçon (T1-T3) se faisant sur les tronçons orientés avec leur dessous ou leur face inférieure présenté(e) pour la détection et la localisation du trognon et sa découpe dans le tronçon.

5. Installation d'étrognage pour enlever le trognon de têtes de légumes à trognons destinées à être ensuite découpées telles que des têtes de salades,
installation comprenant :
- un dispositif de repérage (10) de l'axe (Z-Z) de la tête de légume (1) à étrogner,
- un dispositif de découpe en tronçons (11) pour découper perpendiculairement à l'axe (Z-Z) la tête de légume orientée, en tronçons (Ti),
- un support (20) portant chaque tronçon (T1),
- un dispositif de détection (12) adapté en ce qu'il détecte la présence d'un trognon (TGi) dans chaque tronçon (Ti), et définit la position du trognon ainsi détecté dans le tronçon (Ti), le dispositif de détection (12) associant un repère de coordonnées dans lequel il définit la position du trognon (TGi) par rapport au support dans le tronçon (Ti) détecté,
- un dispositif de découpe (13) adapté en ce qu'il reçoit le tronçon positionné sur le support (20) avec son trognon de façon à découper le trognon (TGi) et récupérer le tronçon (TEi) étrogné, et
- une unité centrale de commande (14) gérant le fonctionnement de l'installation.

6. Installation selon la revendication 5,
**caractérisée en ce que**
le dispositif de découpe de trognon (13) comporte un plateau (131) muni d'un orifice (132) occupé par un contre-couteau (134) en forme de manchon creux et au-dessus de ce plateau (131) qui reçoit le tronçon (Ti) à étrogner, un couteau (133) de forme circulaire ou effectuant un mouvement circulaire et descendant dans le tronçon (Ti) à étrogner pour en enlever le trognon.

7. Installation selon la revendication 5,
**caractérisée en ce que**
le couteau (133) de découpe du trognon dans un tronçon est un couteau circulaire.

8. Installation selon la revendication 5,
**caractérisée en ce que**
le couteau circulaire (133) de découpe du trognon est un couteau de section variable commandée.

## Patentansprüche

1. Verfahren zum Entfernen des Strunks von einem kopfförmigen Gemüse mit Strunk wie z.B. einem ausgewachsenen Salatkopf, wobei
- im Wesentlichen die Achse (Z-Z) des Strunks (TG) an einem kopfförmigen Gemüse, das derart ausgerichtet ist, dass seine Unterseite mit dem Ansatz des Strunks (TGi) nach oben gerichtet ist, visuell bestimmt wird (E1),
- das kopfförmige Gemüse in der umgekehrten Position entlang von Schnittebenen (P1-P2), die wenigstens im Wesentlichen senkrecht zu der auf diese Weise georteten Achse (Z-Z) sind, in Abschnitte (T1-T3) geschnitten wird (E2), und
- die Abschnitte (T1-T3) einzeln in der umgekehrten Position im Hinblick auf ihre Detektion verlagert werden,
- durch Bildanalyse der Abschnitte (T1-T3) in der umgekehrten Position (E3) das Vorhandensein eines Strunkstücks in jedem Abschnitt und die Position (x1, y1) dieses Strunks in einem diesem Abschnitt zugeordneten Koordinatensystem detektiert werden (E4),
- jeder auf diese Weise detektierte und seinem Koordinatensystem zugeordnete Abschnitt (T1-T3) in die Achse einer Entstrunkungsvorrichtung verlagert wird,
- der Strunk (TGi) in der umgekehrten Position aus dem Abschnitt ausgeschnitten wird (E5) und der entstrunkte Abschnitt (TEi) rückgewonnen wird (E6), und
- der Zyklus der Detektion des Vorhandenseins eines Strunks (TGi) und der Bestimmung der Position des Strunks mit den anderen Abschnitten (Ti) wiederholt wird, und im Fall eines Strunks dieser aus dem Abschnitt herausgeschnitten wird.

2. Verfahren nach Anspruch 1,
**dadurch gekennzeichnet, dass**
der Abschnitt (Ti) auf einer Auflage (20) angeordnet wird, die einen Ausrichtungsbezug darstellt, auf den das Koordinatensystem angewendet wird.

3. Verfahren nach Anspruch 1 und 2,
**dadurch gekennzeichnet, dass**
die Auflage (20) mit dem Abschnitt (Ti) derart angeordnet wird, dass die Achse (Z-Z) des Abschnitts mit der Achse (Zc-Zc) des Schneidwerkzeugs zusammenfällt.

4. Verfahren nach Anspruch 1,
**dadurch gekennzeichnet, dass**
das kopfförmige Gemüse (1) entlang von Ebenen (P1, P2), die im Wesentlichen senkrecht zur Achse (Z-Z) des Strunks sind, die vorab in dem ganzen Gemüse geortet wurde, in drei Abschnitte (T1-T3) geschnitten wird, um einen unteren Abschnitt (T1), einen Zwischenabschnitt (T2) und einen oberen Abschnitt (T3) zu erhalten, wobei der untere Abschnitt (T1) eine untere Fläche (A) und eine obere Fläche aufweist, die Zwischenabschnitte (T2) eine untere Fläche (C) und eine obere Fläche (D) aufweisen und der obere Abschnitt (T3) eine untere Fläche (E) aufweist, wobei die Detektion des Strunks (TG1, TG2) in jedem Abschnitt (T1-T3) an den Abschnitten auf eine Weise erfolgt, dass ihre Unterseite oder untere Fläche für die Detektion und Lokalisierung des Strunks und das Herausschneiden von diesem aus dem Abschnitt präsentiert wird.

5. Entstrunkungsanlage zum Entfernen des Strunks von kopfförmigem Gemüse mit Strünken, das dazu bestimmt ist, anschließend geschnitten zu werden, wie z.B. Salatköpfe,
wobei die Anlage Folgendes umfasst:
- eine Vorrichtung zur Ortung (10) der Achse (Z-Z) des zu entstrunkenden kopfförmigen Gemüses (1),
- eine Vorrichtung zum Schneiden in Abschnitte (11), um das ausgerichtete kopfförmige Gemüse senkrecht zur Achse (Z-Z) in Abschnitte (Ti) zu schneiden,
- eine Auflage (20), die jeden Abschnitt (T1) trägt,
- eine Detektionsvorrichtung (12), die dafür eingerichtet ist, das Vorhandensein eines Strunks (TGi) in jedem Abschnitt (Ti) zu detektieren und die Position des auf diese Weise detektierten Strunks in dem Abschnitt (Ti) zu definieren, wobei der Detektionsvorrichtung (12) ein Koordinatensystem zugeordnet ist, in dem sie die Position des Strunks (TGi) in Bezug auf die Auflage in dem detektierten Abschnitt (Ti) definiert,
- eine Schneidvorrichtung (13), die dafür eingerichtet ist, den auf der Auflage (20) angeordneten Abschnitt mit seinem Strunk aufzunehmen, um den Strunk (TGi) herauszuschneiden und den entstrunkten Abschnitt (TEi) rückzugewinnen, und
- eine zentrale Steuerungseinheit (14), die den Betrieb der Anlage verwaltet.

6. Anlage nach Anspruch 5,
**dadurch gekennzeichnet, dass**
die Vorrichtung zum Herausschneiden des Strunks (13) Folgendes beinhaltet: eine Platte (131), die mit einer Öffnung (132) versehen ist, die von einem Gegenmesser (134) in Form einer hohlen Hülse besetzt ist, und über dieser Platte (131), die den zu entstrunkenden Abschnitt (Ti) aufnimmt, ein Messer (133), das eine kreisförmige Form aufweist oder eine kreisförmige Bewegung ausführt und in den zu entstrunkenden Abschnitt (Ti) herabgesenkt wird, um den Strunk daraus zu entfernen.

7. Anlage nach Anspruch 5,
**dadurch gekennzeichnet, dass**
das Messer (133) zum Herausschneiden des Strunks aus einem Abschnitt ein kreisförmiges Messer ist.

8. Anlage nach Anspruch 5,
**dadurch gekennzeichnet, dass**
das kreisförmige Messer (133) zum Herausschneiden des Strunks ein Messer mit gesteuertem variablem Querschnitt ist.

## Claims

1. Method for removing the core from a vegetable head with a core, such as an adult head of lettuce, according to which
- there is determined visually (E1) substantially the axis (Z-Z) of the core (TG) on a vegetable head which is orientated so that the base thereof with the start of the core (TGi) is turned upwards,
- the head of the vegetable is cut (E2) in an upturned position into portions (T1-T3) via cutting planes (P1-P2) which are at least substantially perpendicular to the axis (Z-Z) which is located in this manner, and
- the portions (T1-T3) are transferred one by one for their detection in the upturned position,
- there is detected by image analysis (E4) of the portions (T1-T3) in the upturned position (E3) the existence of a portion piece in each portion and the position (x1, y1) of this core in a system of coordinates associated with this portion,
- each portion (T1-T3) thus detected is transferred, in a state associated with the system of coordinates thereof in the axis of a coring device,
- the core (TGi) of the portion is cut (E5) in an upturned position, the cored portion (TEi) is recovered (E6), and
- the cycle for detection of the presence of a core (TGi) and determination of the position of the core is repeated for the other portions (Ti) and, in the case of a core, it is cut from the portion.

2. Method according to claim 1,
**characterised in that**
the portion (Ti) is placed on a support (20) which constitutes the orientation reference point to which a coordinate system is allocated.

3. Method according to claim 1 and 2,
**characterised in that**
the support (20) is positioned with the portion (Ti) so that the axis (Z-Z) of the portion coincides with the axis (Zc-Zc) of the cutting tool.

4. Method according to claim 1,
**characterised in that**
the vegetable head (1) is cut into three portions (T1-T3) in accordance with planes (P1, P2) substantially perpendicular to the axis (Z-Z) of the core which has been previously located on the whole vegetable in order to obtain a lower portion (T1), an intermediate portion (T2) and an upper portion (T3), the lower portion (T1) having a lower face (A) and an upper face, the intermediate portions (T2) have a lower face (C) and an upper face (D) and the upper portion (T3), a lower face (E), the detection of the core (TG1, TG2) in each portion (T1-T3) being carried out on the portions which are orientated with their base or their lower face presented for the detection and location of the core and the cutting thereof from the portion.

5. Coring installation for removing the core from vegetable heads with cores which are intended to then be cut, such as heads of lettuce,
which installation comprises:
- a device (10) for locating the axis (Z-Z) of the vegetable head (1) to be cored,
- a device for cutting into portions (11) in order to cut perpendicularly to the axis (Z-Z) the vegetable head which is orientated, in portions (Ti),
- a support (20) which carries each portion (T1),
- a detection device (12) which is adapted in that it detects the presence of a core (TGi) in each portion (Ti) and defines the position of the core detected in this manner in the portion (Ti), the detection device (12) associating a coordinate reference in which it defines the position of the core (TGi) relative to the support in the portion (Ti) detected,
- a cutting device (13) which is adapted in that it receives the portion positioned on the support (20) with the core thereof in order to cut the core (TGi) and to recover the portion (TEi) which has been cored, and
- a central control unit (14) which controls the operation of the installation.

6. Installation according to claim 5,
**characterised in that**
the core cutting device (13) comprises a plate (131) which is provided with a hole (132) which is occupied by a counter-blade (134) in the form of a hollow sleeve and above this plate (131) which receives the portion (Ti) to be cored, a blade (133) which is of circular form or which carries out a circular movement and which is lowered in the portion (Ti) to be cored in order to remove the core therefrom.

7. Installation according to claim 5,
**characterised in that**
the blade (133) for cutting the core from a portion is a circular blade.

8. Installation according to claim 5,
**characterised in that**
the circular blade (133) for cutting the core is a blade with a controlled variable cross-section.
